(19)

**Europäisches Patentamt**

**European Patent Office**

**Office européen des brevets**

(11) **EP 3 629 299 A1**

(12) **EUROPEAN PATENT APPLICATION**

(43) Date of publication:
**01.04.2020  Bulletin 2020/14**

(51) Int Cl.:
***G06T 15/20*** *(2011.01)*          ***G06T 15/04*** *(2011.01)*

(21) Application number: **18197718.2**

(22) Date of filing: **28.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventor: **TYTGAT, Donny**
**9860 Oosterzele (BE)**

(74) Representative: **Script IP Limited**
**Turnpike House**
**18 Bridge Street**
**Frome Somerset BA11 1BB (GB)**

(54) **DETERMINING TEXTURE TO APPLY TO A SURFACE IN 3D GRAPHICS**

(57)     A method, apparatus and computer for applying texture to a surface in 3D graphics is discussed. The method comprises: receiving a plurality of images of a 3D structure from a plurality of image sources. A data set is generated for a volume comprising the 3D structure, the data set comprising image source data with a quantitative indication of a suitability of each image source for the data points within the volume. A smoothing function is generated for applying penalties for switching between image sources in neighbouring data points. The preferred image source mapping for the data set is determined from a combination of the image source data and the smoothing function. This image source mapping is then output towards a model generation and display device.

FIG. 2

**Description**

TECHNOLOGICAL FIELD

Various example embodiments relate to 3-D graphics and in particular to providing texture for the surface of a modelled object.

BACKGROUND

3D models typically consist of the combination of a 3D geometry representation and an appearance representation that are merged. The geometry representation may be represented in an explicit manner with 3D coordinates of a surface. This surface may be formed as textured triangular meshes, the triangles forming a surface in a piece-wise linear fashion. Texture coordinates are used to map each of the reconstructed surface points to a location on a 2D texture that represents its appearance. Such a method presents challenges, particularly for real-time captured real-world objects. One can either generate completely independent "frames" per time instance which is expensive in bandwidth, or find a 3D model that can morph into each of the time instances which has a high computation overhead.

It would be desirable to provide an improved way of determining the texture to apply to the surface of a 3D model.

BRIEF SUMMARY

According to various, but not necessarily all, embodiments of the invention there is provided a method comprising: obtaining a plurality of images of a 3D structure from a plurality of image sources; generating a data set for a volume comprising said 3D structure; said data set comprising image source data comprising a quantitative indication of a suitability of each image source for a plurality of data points within said volume; generating a smoothing function for applying penalties for switching between image sources in neighbouring data points; and determining a preferred image source mapping for said data set from a combination of said image source data and said smoothing function; and outputting said image source mapping for said data set.

Selecting a preferred image source from multiple image sources to provide the texture to a particular portion of the surface of a 3D structure is not always straightforward. In particular, where a surface is implicitly modelled then particular challenges may arise. Implicitly modelling a surface of a 3D structure has the advantage of the data for such a model being easy to encode and compress. However, a disadvantage is that it is difficult to put texture onto the surface of the implicitly modelled structure as the surface is not explicitly described. Thus, implicitly modelled surfaces may have texture added at rendering time when the surface is made explicit. At this point it may be difficult to determine the optimal image source for each data point on the surface as the image source information is often remote from the rendering apparatus.

Embodiments seek to address these challenges by providing a preferred image source mapping for a data set that comprises the 3D structure. This image source mapping may be performed early in the procedure perhaps in parallel with or in combination with the modelling, and the data set may then be output and used later at the image generation and display unit where the surface of the 3D structure is explicitly available. At this stage, texture for each data point or pixel on the surface of the 3D structure can be provided from the "preferred" image source identified by the image source mapping. By determining a preferred image source mapping, in some embodiments the amount of data to be transmitted to the image generation and output unit may be reduced and an improvement in quality of the output image may be provided.

Different quantitative measures of the suitability of an image source for a particular data point may be used in some embodiments of the method, and these may be dependent upon one or more of: a distance of the image source from the data point, an angle of projection of said image source to said data point, a resolution of said image source and a confidence in a signal value from said image source. However, although one may provide a quantitative indication of the preferred image source to use for a particular data point in this way the inventor recognised that switching between image sources for different data points may also have an effect on the final image quality and thus, a smoothing function was introduced into the preferred image source determination, the smoothing function applying a penalty for switching between image sources, thereby inhibiting this switching where the quantitative values are close but allowing it where the quantitative values show that one image sensor is clearly superior.

In this way an image source mapping for a data set is provided where both the image source characteristics and the effects of changing between image sources are accounted for.

In some embodiments, the method comprises generating an implicit model of a surface of said 3D structure and outputting said implicit model and said image source mapping towards a display device.

In some embodiments, said step of determining a preferred image source mapping comprises minimising a combination of said image source data and smoothing function and determining said preferred image source for each of said plurality of data points in dependence upon said minimisation.

Although the step of determining a preferred image source mapping can be done by combining the image source data and the smoothing function in a number of ways, in some embodiments it is done by minimising a combined function of the two. In this regard, the quantitative indication assigned for an image source and data point can be set to be smaller the more suitable that image source is. The smoothing function applies penalties such that the smoothing function penalties become larger the less desirable the switching between sources is. Thus, a combination of these two functions can be minimised to provide a "preferred" image source, which takes account of both the suitability/quality of an image source for that data point along with the effect that switching image source will have on the overall image. The minimisation technique may be one of a number of mathematical techniques and in some cases graph cuts described later will be used.

In some embodiments said neighbouring data points are temporally neighbouring.

When smoothing between image sources both temporal changes and spatial changes in image sources may have an effect on the perceived image quality. Thus, in some cases the smoothing function is applied to neighbouring data points in a temporal manner, that is data points at a same spatial point in consecutive frames, while additionally and/or alternatively the smoothing function may be applied to neighbouring data points that are spatially neighbouring, that is adjacent within the volume.

In some embodiments, said step of generating said smoothing function comprises: a step of generating a smoothing function for applying penalties for switching between image sources for a same data point in consecutive images of said 3D structure, and a step of generating a smoothing function for applying penalties for switching between image sources for an adjacent data point in a same image.

It may be that both spatial and temporal smoothing is performed such that penalties are added for changes in image source both temporally and spatially in the optimisation process such that these effects are both considered and the preferred image source selected accordingly.

In some embodiments, the method further comprises setting said penalties in said smoothing function to different values for different regions of said data set.

The penalties in the smoothing function are set to inhibit changes in image source where multiple image sources are deemed to have similar characteristics such that for different data points one or the other may be considered preferable although perhaps not by very much. Changing image source can introduce distortions to the image where the characteristics of the image sources are not identical and where their angle of projection is different. Thus, inhibiting changing of image sources can be advantageous. In some images there may be regions where switching in image sources can cause particular disturbances to the image for a viewer and thus, it may be advantageous if the penalties can be set to different values for different regions such that in certain regions switching image sources can be inhibited to a higher degree.

In some embodiments, the method comprises detecting a region within said data set where it is determined that a change in an image source is not desired and setting said penalties in said detected region to be higher than said penalties in other regions.

Where it is determined that it is not desirable to change an image source then the penalties may be set to a high value. This may be the case where it is determined that the region is one where the 3D structure may be a face or a portion of a face. Providing different image sources for the eyes of a face for example can cause the image to appear disturbing to a viewer and it is preferable to avoid or at least inhibit this where possible.

In some embodiments, the method further comprises comparing signals received from different image sources for a same data point at a same time and setting said penalties in said smoothing function in response to said difference in said compared signals, said penalties being increased where said difference is large.

A further instance where switching between image sources may not be desirable is where it is determined that different image sources are providing different signals for a same data point at a same time. This is an indication that the image sources have quite different characteristics and thus, switching from one to the other may provide a perceptible change of the image. Thus, in some embodiments such switching is inhibited using a higher penalty score.

In some embodiments, the method comprises receiving a tuning input said tuning input indicating a current value of penalties to be applied.

As noted above there are different circumstances where it may be desirous to have increased or decreased penalties applied for switching image sources. This can be on a region basis or in response to image sources having different characteristics. There may however be occasions where the 3D structure being modelled or the circumstances of its modelling make image source changing more or less desirable. Thus, it may be convenient if there is a tuning input allowing these penalties to be changed depending on circumstance. The circumstance may be the type of use of the 3D image generation unit or it may be the current user of the 3D model generation unit who may have their own preferences. The tuning input may also provide indications of a region where higher penalties are to be used and may be applied in response to an input from a system that is perhaps detecting faces within the data structure imaged by the image sources.

In some embodiments, said image sources include a null image source, a quantitative indication being given to a zero signal from said null image source.

In addition to providing quantitative indications for each image source, quantitative indications may also be provided to a null image source such that an indication of the suitability of using no image data is provided along with the suitability of using image data from the different image sources. This allows data points that are not served by image sources or are served particularly poorly by image sources to be given a value that can be used in the rendering of the image to provide some texture to the 3D structure if required. The penalty may be set to a suitable level to inhibit the use of such null source data accept where the image source data is particularly poor or non-existent.

In some embodiments, the method further comprises applying said image source mapping to data points within said data set representing a surface of said 3D structure.

The image source mapping can be used to provide texture to the surface of a 3D structure by selecting the data points within the data set that represent the surface of that structure and using the image source indicated as being the most suitable from the mapping. The surface of the 3D structure may be one generated initially as an implicit surface, the implicit surface data along with the mapping data being transmitted to an output device which will generate an explicit surface and apply the image source mapping to data points within the data set representing a surface for 3D structure.

According to various, but not necessarily all, embodiments of the invention there is provided a computer program comprising instructions which when executed by a processor cause said processor to perform a method comprising: obtaining a plurality of images of a 3D structure from a plurality of image sources; generating a data set for a volume comprising said 3D structure; said data set comprising image source data comprising a quantitative indication of a suitability of each image source for a plurality of data points within said volume; generating a smoothing function for applying penalties for switching between image sources in neighbouring data points; and determining a preferred image source mapping for said data set from a combination of said image source data and said smoothing function; and outputting said image source mapping for said data set.

According to various, but not necessarily all, embodiments of the invention there is provided an apparatus comprising : a receiver for receiving a plurality of images of a 3D structure from a plurality of image sources; circuitry configured to generate a data set for a volume comprising said 3D structure; wherein said data set comprises image source data comprising a quantitative indication of a suitability of each image source for a plurality of data points within said volume; circuitry configured to generate a smoothing function for applying penalties for switching between image sources in neighbouring data points; circuitry configured to determine a preferred image source mapping for said data set from a combination of said image source data and said smoothing function.

In some embodiments said circuitry configured to determine a preferred image source mapping comprises circuitry configured to minimise a combination of said image source data and smoothing function and to determine said preferred image source for each of said plurality of data points in dependence upon said minimisation.

In some embodiments said neighbouring data points are temporally neighbouring.

In some embodiments said neighbouring data points are spatially neighbouring.

In some embodiments said circuitry configured to generate said smoothing function comprises: circuitry for generating a smoothing function for applying penalties for switching between image sources for a same data point in consecutive images of said 3D structure, and circuitry for generating a smoothing function for applying penalties for switching between image sources for an adjacent data point in a same image.

In some embodiments said apparatus further comprises circuitry configured to set said penalties in said smoothing function to different values for different regions of said data set.

In some embodiments said apparatus further comprises circuitry configured to detect a region within said data set where it is determined that a change in an image source is not desired and to set said penalties in said detected region to be higher than said penalties in other regions.

In some embodiments said apparatus further comprises circuitry configured to compare signals received from different image sources for a same data point at a same time and set said penalties in said smoothing function in response to said difference in said compared signals, said penalties being increased where said difference is large.

In some embodiments said apparatus further comprises circuitry configured to receive a tuning input said tuning input indicating a current value of penalties to be applied.

In some embodiments said quantitative indication is dependent upon at least one of distance from surface of said data set, an angle of projection of said image source to said surface, a resolution of said image source and a confidence in a signal value from said image source.

In some embodiments said circuitry configured to generate said data set is configured to include a null image source, a quantitative indication being given to a zero signal from said null image source.

According to a second aspect of various, but not necessarily, all embodiments of the invention there is provided a method comprising: receiving a representation of said 3D structure; receiving an image source mapping for a data set of a volume containing said 3D structure; generating an explicit surface from said representation; applying texture to said surface using image data from image sources indicated by said image source mapping; and displaying said 3D structure.

The generation of an image source mapping for a data set of a volume containing a 3D structure allows this to be transmitted along with a representation of the 3D structure to be used for generating the image. Thus, an image generation and display unit may receive the representation of the 3D structure along with the image source mapping and from this it can generate an explicit surface from the representation and apply the texture of the surface using image data from the image sources indicated in the mapping, the 3D structure can then be displayed.

The representation of the 3D structure may be a number of things but in some embodiments it comprises an implicit representation. Implicit representations can be encoded in an efficient manner such that a reduced amount of data can be transmitted. The problems arising from implicit representations with regard to texturing of the surface are addressed by providing a data set with mapping of preferred image sources to data points within the volume along with the implicit representation. When an explicit surface has been generated from the implicit representation a suitable texture can be selected for each of the data points on the surface using the mapping.

Further particular and preferred aspects are set out in the accompanying independent and dependent claims. Features of the dependent claims may be combined with features of the independent claims as appropriate, and in combinations other than those explicitly set out in the claims.

According to various, but not necessarily, all embodiments of the invention there is provided a computer program comprising instructions which when executed by a processor cause said processor to perform a method according to the second aspect.

According to a third aspect of various, but not necessarily, all embodiments of the invention there is provided an apparatus comprising: a receiver for receiving data comprising a representation of a 3D structure and an image source mapping for a data set of a volume containing said 3D structure; processing circuitry configured to generate an explicit surface from said representation and to apply texture to said surface using image data from image sources indicated by said image source mapping; and display circuitry configured to output said 3D structure.

According to various, but not necessarily, all embodiments of the invention there is provided a system comprising: a data capture apparatus comprising: an apparatus comprising : a receiver for receiving a plurality of images of a 3D structure from a plurality of image sources; circuitry configured to generate a data set for a volume comprising said 3D structure; wherein said data set comprises image source data comprising a quantitative indication of a suitability of each image source for a plurality of data points within said volume; circuitry configured to generate a smoothing function for applying penalties for switching between image sources in neighbouring data points; circuitry configured to determine a preferred image source mapping for said data set from a combination of said image source data and said smoothing function; circuitry for generating a representation of the 3Dstructure; and output circuitry configured to output said image source mapping; and a data generation and display apparatus comprising an apparatus according to the third aspect.

Where an apparatus feature is described as being operable to provide a function, it will be appreciated that this includes an apparatus feature which provides that function or which is adapted or configured to provide that function.

## BRIEF DESCRIPTION

Some example embodiments will now be described with reference to the accompanying drawings in which:

FIG. 1 illustrates a flow diagram showing steps performed for a method according to an example embodiment;
FIG. 2 illustrates a flow diagram showing a specific example of the method of Fig. 1 using graph Cuts optimisation according to an example embodiment;
FIG. 3 shows graphs illustrating examples of different metrics that may be used to provide a quantitative indication of a suitability of an image source;
Fig. 4 shows example results from performing a method according to an example embodiment;
Fig. 5 shows a system according to an example embodiment; and
Fig.6 shows a flow diagram illustrating steps performed in a method at a 3D structure generation and display apparatus according to an example embodiment.

## DETAILED DESCRIPTION

Before discussing the example embodiments in any more detail, first an overview will be provided.

3D models typically consist of the combination of a 3D geometry representation and an appearance representation that is merged with the geometry. Typically, the geometry is represented in an explicit manner; i.e. one explicitly has the 3D coordinates of a representation of the surface that one wants to represent. The most popular example is textured triangular meshes where triangles are used to represent a surface in a piece-wise linear fashion and pre-authored texture coordinates are used to map each of the reconstructed surface points to a location on a 2D texture that represents its appearance. The problem with such representations is however that they are difficult to use for real-

EP 3 629 299 A1

time captured real-world objects. One can either generate completely independent frames' per time instance that are very expensive to transport (think of intra-compression for traditional video coding, but in 3D), or one needs to find a 3D model that can morph into each of the time instances in order to exploit inter-compression. The former means very high bandwidth, while the latter means very high computation. Neither is ideal.

Implicit geometry representations can address this issue. Geometry is represented in an indirect manner by means of a function that takes the 3D coordinates as an input and generates a certain aspect/ metric of the surface wrt. each of the sampling points. A SDF (Signed Distance Function) based implicit surface for instance outputs the nearest distance of any given point to the surface of the 3D object that one wants to reconstruct, with a sign representing whether the point lies inside or outside of the object. This functional approach enables modelling of arbitrary topologies that can evolve through time without any special treatment of the topology. This is not possible with explicit geometries. As an implicit geometry is typically represented by a function, one can furthermore choose to sample this function at arbitrary rates in the spatial and temporal domain; the implicit surface function in particular is highly smooth which makes it a good candidate for efficient compression.

A difficulty with implicit geometries however is the appearance or surface texture. Where one can assign the appearance in 2D for explicit representations (the surface is explicitly represented and can be unfolded onto a 2D texture), this is not the case for implicit geometries. Because no explicit notion of a surface is used, one cannot create a 2D parameterization that is used to map 3D surface points onto a 2D texture.

Embodiments seek to generate a data set representing a set of points within a volume, the data set provides image source mappings for each point in the volume. These image source mappings can be used in conjunction with a surface generated by a model to provide texture to that surface. The surface may be generated by an implicit surface model or by an explicit surface model. The mappings are determined early in the procedure by processing circuitry at the data capture side of the system and may be used to provide texture to a surface at the data output side of a system where an explicit surface is generated. By determining the mapping at the data capture side of the system, data from each image source is available and the preferred image source can be determined in an effective manner.

In some embodiments, the plurality of image sources may be virtual or physical image sources. The physical image sources may comprise cameras. These image sources provide 2D representations of a 3D structure within a volume.

Embodiments receive data from the image sources and provide a quantitative indication of the suitability of the signal from that image source for each of a set of data points within a volume, the suitability is determined based on factors such as distance from the data point, angle of projection, reliability of data received and resolution of the image source. This value is then combined with a smoothing function which adds penalties to the suitability where it is determined to be from a different source to that from a neighbouring, either spatially or temporally data, point. The preferred image sensor for a data point is thereby determined and a mapping of preferred image sensors for the set of data points may be output.

The data from the image sensors is also analysed to provide a geometric representation of a 3D structure being imaged. This may be an implicit geometric representation, such as one using a SDF to model the 3D structure by indicating how far points are from the closed surface, a sign indicating if the point is within or outside of the surface. Such a model has continuity in both the spatial and temporal domain providing data that can be effectively compressed, allowing for a representation that can be transmitted and/or stored with reduced bandwidth. Thus, in some embodiments, a modelled or implicit representation of the 3D structure is output along with the image source mapping data.

This data is received at an output apparatus that generates an explicit surface representing the 3D structure from the received geometric representation and then applies texture to the surface by mapping to data from the image sensors, using the image sensor mapping.

In summary a dense mapping is constructed that allows for a temporally consistent texture mapping that is globally optimized or at least improved over the considered 3D space. This is derived from an initial sparse mapping with local characteristics, and provides a temporal model that is continuously updated and may receive prior information that can impose higher level statistics about the resulting dense mapping. In this way one combines the advantages of having an explicitly parameterized surface (such as used by explicit geometry representations) with the flexibility of the implicit geometry representations.

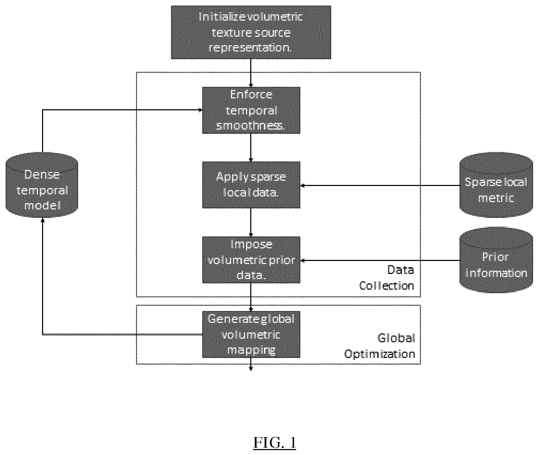

Fig. 1 illustrates this principle. A volumetric representation is first constructed that will hold the texture source index information within a 3D structure, this will represent the - typically sampled - representation of the function that returns the optimal or preferred texture source(s) for a certain 3D location. Information is then ingested into this structure in order to impose the particular temporal model, the locally available information and the available (possibly dynamically generated) prior information that can be used to impose priority / smoothness to certain volumetric regions. The aggregated information is then sent to an optimizer that will create an optimal or at least improved texture source mapping given the input restrictions.

The explicit choice of the individual function blocks of fig. 1 will be dependent on the type of optimization technique that is used in the final step because all data needs to be transformed as an input to this optimizer. In one example embodiment that provides a real-time end-to-end volumetric video streaming platform, that may be used for example in video conferencing type scenarios where a 3D projection of the people is provided.

As the basic optimization technique, Graph Cuts has been chosen with alpha-expansion for multi-label support. Although this optimisation technique is used in this embodiment, it is simply an example and other similar mathematical techniques could be used. An explanation of Graph Cuts can be found at https://profs.etsmtl.ca/hlombaert/energy where it is shown how they can be used to find the optimal solution to a binary problem. An example is provided where each pixel in a space can be assigned many labels or image sources and a series of graph cuts that can be used to find a convenient local minimum for such a problem is described.

The advantage of this technique is that one can create both data- and smoothness terms on a per-label/image source basis and the optimization can be made real-time by fixing the topology of the graph to a volumetric 3D model mesh, such as a cubic structure with a 6- or a 26 neighbourhood.

As an input to such a graph-cut optimizer, a set of labels and a set of data/ smoothness functions is required. In this case each label represents a texture source index or image source. There will be an additional label in this embodiment for data points where no texture source can be assigned. As such we have $n+1$ labels where $n$ is the number of image or texture sources. With 2 texture sources, one could have the label set { 'null', 'Tex0', 'Tex1'} for instance, where the label 'null' represents the extra label to denote the case where no texture source is defined.

One of the functions that needs to be defined is the function providing the data term $D(x,a)$, with $x$ being a point in 3D space and $a$ a certain label (representing an image source). This data term defines, for a certain 3D coordinate x and label a, what "energy" is needed if this label is assigned to that coordinate. As such, for a certain location x, you could have the following assignments for instance:

$$D(x, 'null') = 1000$$

$$D(x, 'Tex0') = 520$$

$$D(x, 'Tex1') = 480$$

This means that the least energy is needed when assigning label 'Tex1'to coordinate x, a bit more energy when assigning 'Tex0' to x and much more energy when assigning label 'null'. If this were the only term to optimize, the choice would be easy: 'Tex1'would be chosen for coordinate x.

The "energy" level is set in dependence upon the assessed quality of the image source information, a low level indicating a high quality. The value is termed "energy" as the mathematical techniques used to determine the optimum value are generally termed energy minimisation techniques.

In order to create a global optimization however, one cannot simply use these data terms. Instead, a so-called *smoothing term* S(x,y,a,b) is added with x,y neighboring coordinates and a,b the assigned labels for x,y. This term will impose penalties among neighbouring coordinates according to the function specifications. One can for example add an energy cost when the label between neighbours is different:

$$S(x,y,a,b) = a == b \ ? \ 0 : 100$$

So for the above a cost or penalty of 100 is added. The amount of penalty added can be varied depending on circumstances and these will be outlined further below.

The graph-cut optimizer will then use these data- and smoothness terms as an input, and try to create a labelling L(x) that minimizes $D(x,L(x)) + S(x,N(x),x,L(N(x)))$ for all x and N(x) (neighbours of x). This will provide an indication of a preferred image source for each data point in the volume represented.

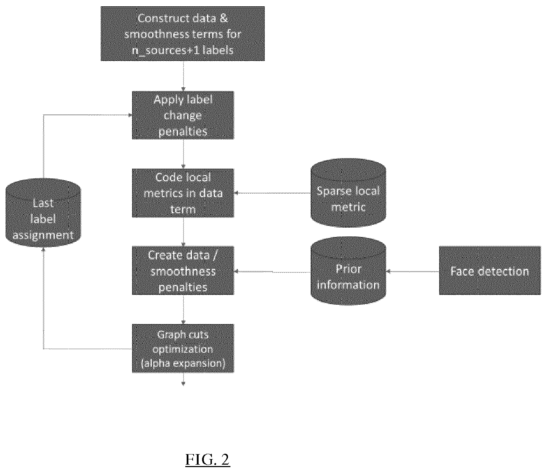

Fig. 2 provides an example of fig. 1 when using this framework:
First of all the data structures are created that will hold the data and smoothness functions. The 3D space us uniformly sampled so that the function is stored as an array: D(x,a) := D'[x][a], with D' the name of the multi-dimensional array. Each of the elements of this array is initialised to a certain basis energy value $E_b$.

For the smoothness function, a functional approach is maintained as the number of combinations is too large to completely unroll. As we will show however, a mapping table will be called by this function which is dependent on the spatial location, thus allowing smoothness to vary depending on the location.

The *apply label change penalties* block will then add a penalty to the data term for each label change through time: D(x,a) += $L_{t-1}(x)$ == a ? 0 : $E_{1c}$. This means that the optimizer will need to allocate more energy to change a label rather than to preserve it, and thus other incentives will be needed to make this decision (either in the data, or the smoothing term). Note that this simple temporal model was triggered by the computational requirements, however more advanced temporal models can be useful where a larger time window is taken into account. In effect in this case, the temporal smoothness is applied via the data term due to computational requirements. It would be desirable to include the temporal neighbour in the smoothing term (instead of the data term), however this would mean that many of the optimizations in the energy minimization cannot be used. As such in this specific implementation the choice was made to enforce the temporal smoothness via the data term, and the smoothing function is only defined within the (temporal) frame.

The next step will ingest the local data into the model. This local data typically consists of a number of metrics:

- Distance of point x to the nearest surface as seen by the camera corresponding to labels a,b,c,...
- Projection angle: angle between the normal of the nearest surface, and the vector connecting the nearest surface point and each of the cameras.
- Confidence of the value provided by the camera corresponding to labels a,b,c,...

$$D(x,a) \mathrel{+}= \text{dist\_metric}(x,a) + \text{proj\_metric}(x,a) + \text{conf\_metric}(x,a)$$

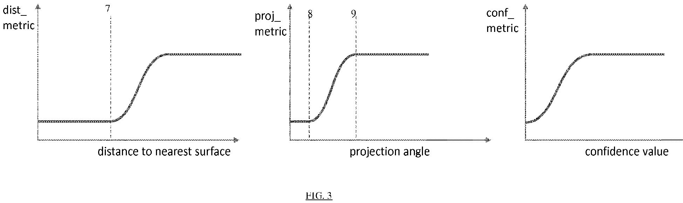

An example for these functions is shown in Fig. 3. Note that the actual values all depend on the 3D coordinate x and on the specific label a.

In the first graph for the distance metric, the dotted line 7 represents the "ideal" maximum distance given sampling rate, so at a greater distance than this one starts to impose a penalty. In the second graph for projection angles, 8 represents the angle from which one starts imposing a penalty, while 9 represents the angle from which a maximum penalty is applied,

Furthermore note that this is only applicable for the labels that have an actual image source corresponding to them; the *null* label for instance is not being given these penalties. Instead, it is given a penalty that is determined by function penalty_null(x):

$$\text{penalty\_null}(x) = if\,(\forall a\colon \text{dist\_metric}(x,a) > T)\;A\colon B$$

Meaning that if a point x lies far from a surface as seen by any of the cameras, penalty value A will be added while otherwise penalty value B will be added. Note that the value of B provides an incentive to use an image source if one is available rather than specifying no camera, even if other metrics add penalties to it. Thus, if a strong incentive to use an image source is required B should be set to a high value.

The last block before the actual optimization is the *create data / smoothness penalties* based on prior information. This is in effect a way of tuning the smoothness to make it more or less likely that the image source will switch between neighbouring points.

A first example is the use of a preferred camera where it is known beforehand that one camera is the main camera, and the others are secondary cameras. In this case, one might want to give a penalty to the non-primary cameras in order to make the optimization result tend towards the primary camera. One would add a penalty to D(x,a) for each label a that corresponds to a camera that is not the primary camera.

A more dynamic example is the use of a so-called smoothing volume that is dynamically generated. A smoothing volume can be used to try and keep the label constant within this volume. This can be useful when capturing faces for instance. One will typically want to prevent labels from changing within the face because this can create visual artefacts, and human observers are very sensitive to artefacts within the face region. As such one can use a face detection algorithm to generate a 3D smoothing volume; this smoothing volume is then used to impose an additional penalty on label changes that happen within this volume:

$$S(x,y,a,b) = a == b\,?\,0 : 100 * \max(V_s(x), V_s(y))$$

With $V_s(x)$ a penalty multiplier that will be large within the smoothing volume and 1 outside of this volume (for instance).

An additional/ alternative tuning method may be to determine a difference between signal values for different image sources and where this above a certain threshold an increased penalty could be applied for switching between sources. Where the image sources are providing different signals then any switching will be more noticeable and thus, should be inhibited.

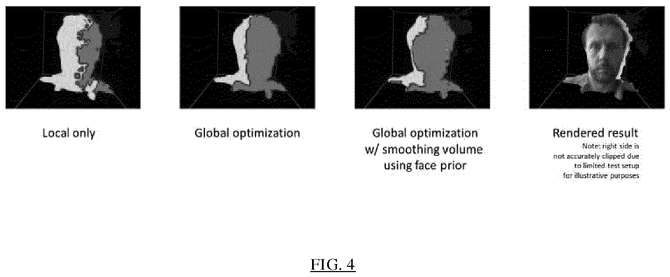

In summary techniques of embodiments allow for real-time texturing to be done on implicit geometries that fulfil both local and global constraints. A result of one implementation is shown in Fig 4.

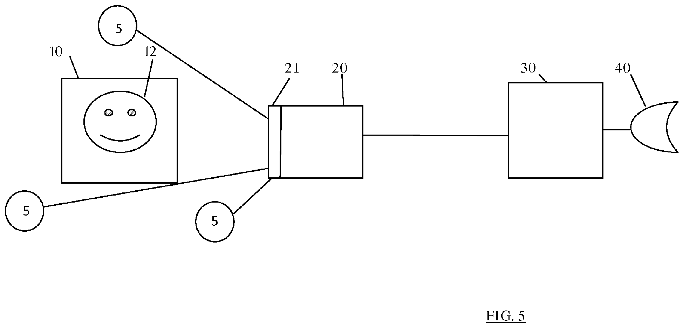

Fig 5 shows a system according to an embodiment. The system comprises cameras 5 arranged at different spatial locations around a volume 10 being imaged. There is a 3D structure 12 shown schematically as a head within volume 10. Data from the cameras 5 is received at receiver 21 and is then processed in processing circuitry 20.

Processing circuitry 20 samples the received image data and forms an array of data points relating to points within volume 10 for each camera. The circuitry then forms a data set comprising an array with corresponding data points, where each term in the array comprises a weight indicative of the suitability of a particular camera for providing texture for that data point along with a camera identifier for that camera. A weighting value may also be provided for a "null" camera. Processing circuitry 20 then generates a smoothing function for applying penalties for switching between cameras in neighbouring data points, the penalty functions may be constant for the whole volume or may change with different regions. Processing circuitry 20 then applies a minimisation function to a combination of the weighted camera data and the smoothing function in order to determine a preferred image source mapping for the set of data points.

Processing circuitry 20 may also generate an implicit representation of the 3D structure 12 and this data along with the image source mapping data is transmitted to output processing circuitry 30. Output processing circuitry 30 generates an explicit surface for the 3D structure 12 and applies surface textures to each data point on the surface using image data from cameras determined by the image source mapping. The 3D structure is then output using projector 40.

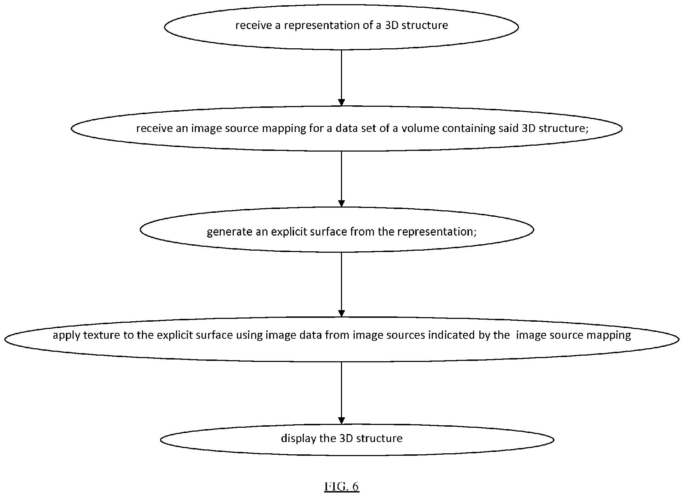

Fig. 6 shows a flow diagram illustrating steps of a method performed at the output side of the system of Fig 5. Data is received that includes a representation of the 3D structure and an image source mapping for a volume containing the 3D structure. An explicit surface is generated from this representation. Texture is then applied to the explicit surface using image data from image sources indicated by the image source mapping, and the 3D structure is then displayed.

As used in this application, the term "circuitry" may refer to one or more or all of the following:

(a) hardware-only circuit implementations (such as implementations in only analog and/or digital circuitry) and
(b) combinations of hardware circuits and software, such as):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A method comprising:

    receiving a plurality of images of a 3D structure from a plurality of image sources;
    generating a data set for a volume comprising said 3D structure; wherein
    said data set comprises image source data comprising a quantitative indication of a suitability of each image source for a plurality of data points within said volume;
    generating a smoothing function for applying penalties for switching between image sources in neighbouring data points;
    determining a preferred image source mapping for said data set from a combination of said image source data and said smoothing function; and
    outputting said preferred image source mapping.

2. A method according to claim 1, wherein said step of determining a preferred image source mapping comprises minimising a combination of said image source data and smoothing function and determining said preferred image source for each of said plurality of data points in dependence upon said minimisation.

3. A method according to claim 1 or 2, wherein said neighbouring data points are at least one of temporally neighbouring and spatially neighbouring.

4. A method according to any preceding claim, further comprising setting said penalties in said smoothing function to different values for different regions of said data set.

5. A method according to claim 4, comprising detecting a region within said data set where it is determined that a change in an image source is not desired and setting said penalties in said detected region to be higher than said penalties in other regions.

6. A method according to any preceding claim, further comprising comparing signals received from different image sources for a same data point at a same time and setting said penalties in said smoothing function in response to said difference in said compared signals, said penalties being increased where said difference is large.

7. A method according to any preceding claim, comprising receiving a tuning input said tuning input indicating a current value of penalties to be applied.

8. A method according to any preceding claim, wherein said quantitative indication is dependent upon at least one of distance from a surface of said 3D structure, an angle of projection of said image source to said surface, a resolution of said image source and a confidence in a signal value from said image source.

9. A method according to any preceding claim, wherein said image sources include a null image source, a quantitative indication being given to a zero signal from said null image source.

10. A computer program comprising instructions which when executed by a processor cause said processor to perform a method according to any one of claims 1 to 9.

11. An apparatus comprising:

    a receiver for receiving a plurality of images of a 3D structure from a plurality of image sources;
    circuitry configured to generate a data set for a volume comprising said 3D structure; wherein
    said data set comprises image source data comprising a quantitative indication of a suitability of each image source for a plurality of data points within said volume;
    circuitry configured to generate a smoothing function for applying penalties for switching between image sources in neighbouring data points;

circuitry configured to determine a preferred image source mapping for said data set from a combination of said image source data and said smoothing function.

12. A method comprising:

   receiving a representation of a 3D structure
   receiving an image source mapping for a data set of a volume containing said 3D structure;
   generating an explicit surface from said representation;
   applying texture to said surface using image data from image sources indicated by said image source mapping; and
   displaying said 3D structure.

13. A computer program comprising instructions which when executed by a processor cause said processor to perform a method according to claim 12.

14. An apparatus comprising:

   a receiver for receiving data comprising a representation of a 3D structure and an image source mapping for a data set of a volume containing said 3D structure;
   processing circuitry configured to generate an explicit surface from said representation and to apply texture to said surface using image data from image sources indicated by said image source mapping; and
   display circuitry configured to output said 3D structure.

15. A system comprising:

   a data capture apparatus comprising:

      an apparatus according to claim 13;
      circuitry for generating a representation of the 3D structure; and
      output circuitry configured to output said image source mapping; and

   a data generation and display apparatus comprising an apparatus according to claim 14.

Initialize volumetric
texture source
representation.

Enforce
temporal
smoothness.

Dense
temporal
model

Apply sparse
local data.

Sparse local
metric

Impose
volumetric prior
data.

Prior
information

Data
Collection

Generate global
volumetric
mapping

Global
Optimization

FIG. 1

FIG. 2

dist_
metric

7

distance to nearest surface

proj_
metric

8    9

projection angle

conf_
metric

confidence value

FIG. 3

Local only · Global optimization · Global optimization w/ smoothing volume using face prior · Rendered result
Note: right side is not accurately clipped due to limited test setup for illustrative purposes

FIG. 4

FIG. 5

receive a representation of a 3D structure

receive an image source mapping for a data set of a volume containing said 3D structure;

generate an explicit surface from the representation;

apply texture to the explicit surface using image data from image sources indicated by the image source mapping

display the 3D structure

FIG. 6

**EP 3 629 299 A1**

Europäisches Patentamt

European Patent Office

Office européen des brevets

# EUROPEAN SEARCH REPORT

Application Number

EP 18 19 7718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAN GAL ET AL: "Seamless Montage for Texturing Models", COMPUTER GRAPHICS FORUM, vol. 29, no. 2, May 2010 (2010-05), pages 479-486, XP055556961, GB ISSN: 0167-7055, DOI: 10.1111/j.1467-8659.2009.01617.x * section 3 * | 1-15 | INV. G06T15/20 G06T15/04 |
| X | RUOFEI DU ET AL: "Montage4D", INTERACTIVE 3D GRAPHICS AND GAMES, ACM, 2 PENN PLAZA, SUITE 701NEW YORKNY10121-0701USA, 15 May 2018 (2018-05-15), pages 1-11, XP058407212, DOI: 10.1145/3190834.3190843 ISBN: 978-1-4503-5705-0 * sections 3, 4 * | 1-15 | |
| X | TYTGAT DONNY ET AL: "A real-time 3D end-to-end augmented reality system (and its representation transformations)", PROCEEDINGS OF SPIE; [PROCEEDINGS OF SPIE ISSN 0277-786X VOLUME 10524], SPIE, US, vol. 9971, 27 September 2016 (2016-09-27), pages 99710U-99710U, XP060078036, DOI: 10.1117/12.2237804 ISBN: 978-1-5106-1533-5 | 12-15 | TECHNICAL FIELDS SEARCHED (IPC) G06T H04N |
| A | * section 3 * | 1-11 | |

-/--

The present search report has been drawn up for all claims

| Place of search | Date of completion of the search | Examiner |
|---|---|---|
| Berlin | 18 February 2019 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

18

Europäisches
Patentamt

European
Patent Office

Office européen
des brevets

# EUROPEAN SEARCH REPORT

Application Number

EP 18 19 7718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NIEM ET AL: "Mapping Texture from Multiple Camera Views onto 3D-Object Models for Computer Animation", PROCEEDINGS OF THE INTERNATIONAL WORKSHOP ON STEREOSCOPIC ANDTHREE DIMENSIONAL IMAGING, XX, XX, 6 September 1995 (1995-09-06), pages 1-7, XP002347355, * section 4 * | 1-15 | |

-----

TECHNICAL FIELDS
SEARCHED (IPC)

The present search report has been drawn up for all claims

| Place of search | Date of completion of the search | Examiner |
|---|---|---|
| Berlin | 18 February 2019 | Bouchaâla, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................
& : member of the same patent family, corresponding
document

EPO FORM 1503 03.82 (P04C01)